# EUROPEAN PATENT SPECIFICATION

(11) **EP 4 000 838 B1**
(45) Date of publication and mention of the grant of the patent: **17.04.2024**
(21) Application number: 20209055.1
(22) Date of filing: 20.11.2020
(51) Int. Cl.: B29B 7/18, B29B 7/22, B29C 48/59, B29C 48/67

(54) **ROTOR FOR INTERNAL BATCH MIXER, INTERNAL BATCH MIXER AND RELATED COMPUTER PROGRAM**
ROTOR FÜR INNENCHARGENMISCHER, INNENCHARGENMISCHER, UND DARAUF BEZOGENES COMPUTERPROGRAMM
ROTOR POUR MALAXEUR DISCONTINU INTERNE, MALAXEUR DISCONTINU INTERNE, ET PROGRAMME INFORMATIQUE ASSOCIÉ

(43) Date of publication of application: 25.05.2022
(73) Proprietor: Farrel Limited, Rochdale, Lancashire OL11 2QQ (GB)
(72) Inventor: JOHNSON, Mark, Leeds LS27 7AS (GB); WILSON, Ian, Rochdale OL11 4AX (GB)
(74) Representative: Marks & Clerk LLP

(56) References cited:
- CN-U- 204 640 584
- CN-U- 205 915 549
- CN-U- 206 999 376
- DE-A1-102018 201 482
- US-B2- 6 494 607

## Description

### Technical field

The present invention relates to a rotor, and in particular to a rotor for use in a tangential internal batch mixer.

### Background

In the production of materials, such as rubber or plastic, mixers such as internal batch mixers, are often used to mix a batch of raw ingredients together in order to help form the material. Internal batch mixers comprise a mixing chamber into which a batch of material is mixed by two counter rotating rotors arranged parallel to one another. The rotors feature one or more wings, which provide dispersive and distributive mixing of the material. Once the material has been mixed for a predetermined period of time, the material is removed from the mixing chamber. The material can then be further processed, or used in the manufacturing of goods, such as tyres.

Mixers, such as internal batch mixers, may comprise intermeshing or non-intermeshing rotors. Intermeshing rotors have wings which mesh together and where the rotors are driven at the same rotational speed. The wings of non-intermeshing rotors do not mesh and so the non-intermeshing rotors may be driven at either the same rotational speed (sometimes known as even speed) or at different rotational speeds (sometimes known as frictional) for achieving different mixing and kneading effects. Non-intermeshing rotors are often referred to as tangential rotors, and mixers which comprise tangential rotors are often referred to a tangential mixers.

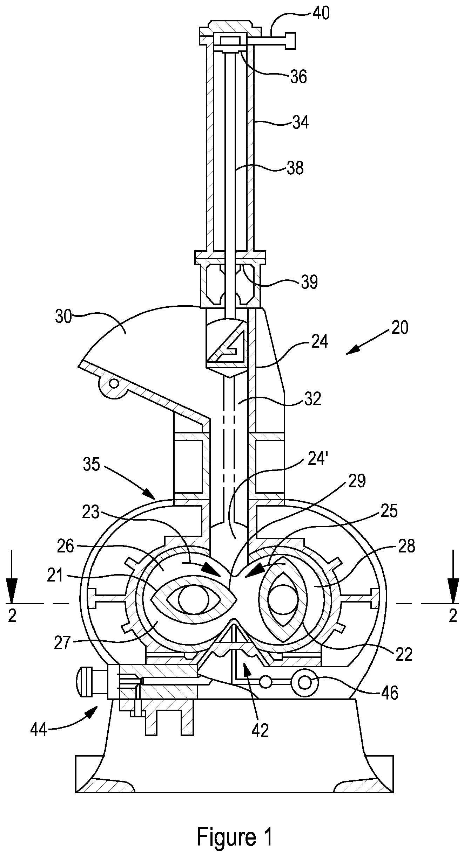

Figure 1 shows a cross section of a typical tangential mixer 20 of the type used to mix materials such as rubber and plastic. Such a mixer 20 is described in US 6494607 B2. The mixer 20 comprises a mixing chamber 26 where material is mixed. The mixing chamber 26 comprises first and second tangential rotors 21, 22 for mixing the material. A ram 24 is used to move materials to be mixed into the mixing chamber 26. The ram 24 is shown between a raised position (shown in solid outline in Figure 1) and a lowered position 24' (shown in dashed outline in Figure 1). Additionally, when the ram 24 is in the lowered position 24', the ram 24' seals the mixing chamber 26, preventing the material in the mixing chamber 26 from forcing its way back out during mixing.

The first and second rotors 21, 22 counter-rotate about spaced apart parallel horizontal axes, as shown by arrows 23 and 25. The first rotor 21 rotates in a clockwise direction about its axis (as seen from the view point in Figure 1) and the second rotor 22 rotates in an anti-clockwise direction about its axis (as seen from the view point in Figure 1). The mixing chamber 26 is shaped to accommodate the first and second rotors 21, 22 and comprises first and second chamber cavities 27, 28 which are each generally cylindrical in shape and which each generally house the first and second rotors 21, 22. The first and second chamber cavities 27, 28 are positioned in a horizontally opposed relationship and are open toward each other. Located between the first and second rotors 21, 22 is a central mixing region 29 of the mixing chamber 26.

Once mixing is complete, the mixed materials are discharged from a bottom of the mixing chamber 26 through a discharge opening at the bottom of the mixer 20. The discharge opening is sealed by a door 42 while material is being mixed in the mixing chamber 26. A locking mechanism 44 is used to hold the door 42 in a closed position during mixing. In order to open the door 42, the door 42 is configured to rotate about a hinge shaft 46 such that the door 42 can swing open, unsealing the discharge opening and allowing material within the mixer 20 to fall out. A pair of hydraulic torque motors, not shown, may be mounted on opposite ends of the hinge shaft 46 in order to swing the door 42 to an open or closed position.

Figure 2, disclosed in in US6494607B2, is a plan sectional view of the mixer 20 of Figure 1 taken along line 2-2. The first and second rotors 21 and 22 are rotated in opposite directions 23, 25 by a gear mechanism 48 that is driven by a drive motor 50. The gear mechanism 48 may comprise identical meshing gears for driving the rotors 21, 22 at the same speed (even speed) or non-identical gears to give a fixed friction ratio. The drive motor 50 may be of conventional configuration and may include speed control means for varying the speed of rotation for the rotors 21, 22 as desired, depending upon the particular ingredients in the mixing chamber 26 and their temperature and viscous state, and depending upon the desired rate of mixing power to be delivered by the rotors 21, 22. The gear mechanism 48 outputs torque to first and second drive shafts, 55, 56, where the first drive shaft 55 connects to the first rotor 21, and the second drive shaft 56 connects to the second rotor 22.

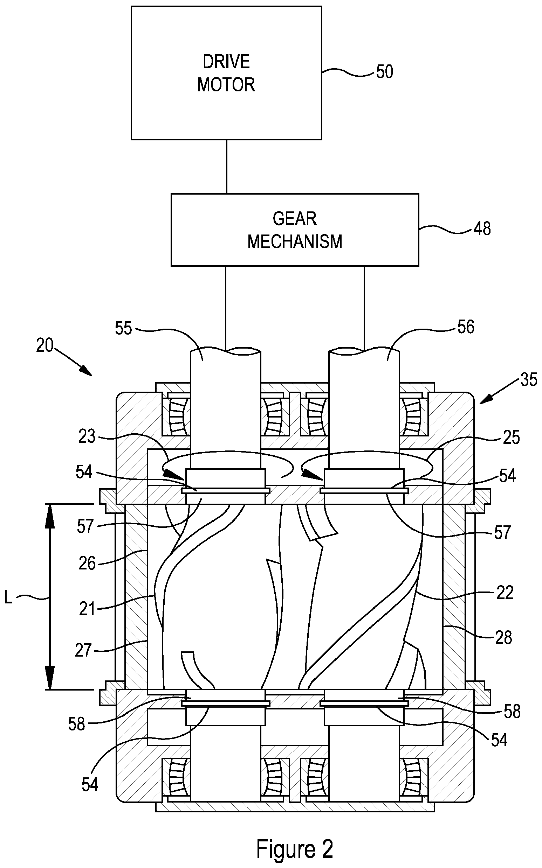

Sealing collars 54 are located adjacent to each end, 57, 58 of each of the first and second rotors 21, 22 for sealing the mixing chamber 26. Each end 57, 58 of the rotors 21, 22 adjacent to the respective collars 54 are often referred to as "collar ends". Referring to Figure. 2, the first and second rotors 21 and 22 are shown as each having a rotor axial length "L" measured between their respective collar ends 57, 58. The collar end 57 connected to the drive shaft 55, 56 is sometimes known as the "driven end" of the rotor. The other collar end 58 is sometimes known as the "coolant end" or "water end". The rotors 21, 22 contain coolant passageways, and coolant, such as water, is fed into the coolant passageways at the coolant end 58. Pumping coolant through the rotors 21, 22 helps to control the temperature of the material being mixed. Temperature control during mixing is important as excess heat within the material being mixed can deteriorate the quality of the mixing and lead to an inferior end product.

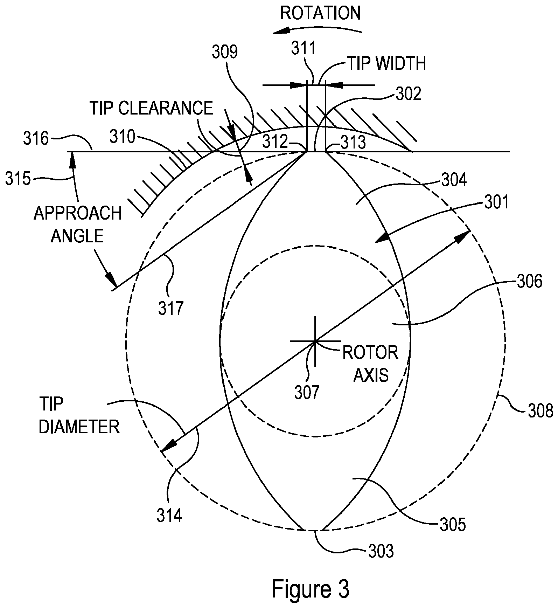

Figure 3, disclosed in in US6494607B2, shows a cross section through a typical rotor 301 (e.g. through a plane perpendicular to the axial direction of the rotor) such as the first and second rotors 21, 22, and illustrates terminology used with respect to the rotor. The rotor 301 is shown as having a generally elliptical shape, where a major axis of the ellipse terminates in first and second wing tips 302, 303. The wing tips comprise a wing tip surface having a tip width 311, where as can be seen, the width is measured in the plane perpendicular to the axis of the rotor (e.g. the axis of rotation). That is, the width is measured between two points having the same axial position along the axial length of the rotor. The elliptical shape is due to wings 304, 305 extending from a circular body 306 of the rotor 301, where the body 306 is shown in dashed outline. The rotor 301 has a rotor axis 307 and a circular envelope 308 of the rotor 301 is defined by the first and second wing tips 302, 303 of the rotor 301 when rotated about the rotor axis 307. Tip clearance 309 is defined as the distance between the wing tip 302 and a wall 310 of a mixing chamber in which the rotor 301 is located. As can be seen in Figure 3, tip width 311 is the distance between a leading edge 312 of the wing tip 302 and a trailing edge 313 of the wing tip 302 in a plane perpendicular to the axis of rotation 307. A rotor tip diameter 314 is defined as the diameter of the envelope 308 traced out by the wing tips 302, 303. An approach angle 315 is defined as the change in angle from a tangent 316 of the surface wing tip to a tangent 317 of a side of the wing 304 at the edge 312 of the wing tip 302.

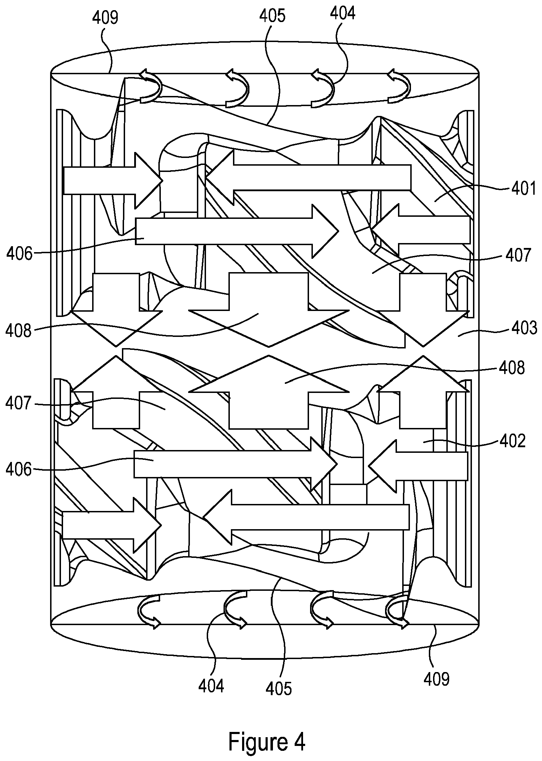

Figure 4 shows three main flow components of fluid movement of material being mixed when using typical prior art rotors 401, 402 within a mixing chamber 403.

A first component is commonly known as gap flow 404, and is the flow of material between rotor tips 405 and a wall of the mixing chamber 409. The flow of material over narrow wing tips can help promote improved dispersion through high shear induced in the material being mixed. The degree of gap flow 404 is generally governed by the tip width and the angle of the wing relative to the rotational axis, also known as the helix angle.

A second component 406 is the flow of material along a length of wings 407 of the rotor 401, 402, which displaces the material along the axial length of the rotor 401,402. The flow of material along the length of the wings 407 can promote improved distribution of the material being mixed.

A third component 408 is the flow of material in front of the wings 407, which displaces the material radially from the rotors 401, 402. In other words, the material is moved from one rotor to the other (sometimes referred to as side flow). The flow of material from one rotor to the other rotor can promote faster mixing of the material through improved distribution.

### Summary of Invention

It is an object of the present invention to obviate or mitigate at least one problem of the prior art.

In a first aspect of the invention there is provided a rotor according to claim 1 for use in an tangential internal batch mixer, the rotor comprising: a main body configured to rotate about a rotor axis, a wing extending from the main body, and arranged helically about a portion of the main body, the wing comprising a wing tip surface, a first portion of the wing tip surface extending between a first edge and a second edge of the wing; wherein the first edge comprises a first helix angle (α) and the second edge comprises a second helix angle (β), the first helix angle being different to the second helix angle.

Providing a wing having edges with different helix angles provides a wing tip surface which varies along its length. That is, the width of the wing and wing tip surface varies continuously along at least a portion of the length of the wing. In other words, the wing tip surface is tapered. Advantageously, providing such variation in wing tip surface width provides for greater mixing capabilities of the rotor. Additionally, said variation also provides greater range of materials that may be mixed using a mixer comprising the rotor. For example, some materials are optimally mixed using a rotor with a relatively narrow wing tip surface, and other materials are optimally mixed using a rotor with a relatively wide wing tip surface. The rotor of the present invention can be used to mix both types of materials, e.g. the tapering in width of the wing provides a wing which has both the benefits of a narrow wing tip and a wide wing tip on the same wing.

A further advantage of a wing having a tapered wing tip surface is that the wing allows variation in the three components of material flow (front, side and gap) when using the rotor wing. This may be beneficial with materials that mix better with a narrow wing tipped rotor, but also require the advantages provided by a wide tipped rotor, such as increased front and side flow.

The first edge may be on a first side of the wing and the second edge may be on a second, opposing, side of the wing. For example, the first edge may be a leading edge of the wing and the second edge may be a trailing edge of the wing.

The wing may extend radially from the main body. Optionally, substantially every position on the surface of the first portion of the wing tip surface may be substantially the same radial distance from the rotor axis.

The wing may comprise a third edge and a fourth edge, a second portion of the wing tip surface extending between the third edge and the fourth edge, the third edge comprising a third helix angle α1 and the fourth edge comprising a fourth helix angle β1.

The third edge may be on the first side of the wing and the fourth edge may be on the second, opposing, side of the wing. For example, the third edge may be a leading edge of the wing and the fourth edge may be a trailing edge of the wing. That is, both the first edge and third edge may form the first side (e.g. leading edge), and both the second edge and fourth edge may form the second side (e.g. trailing edge).

The surface area (sometimes referred to as land area) of the first portion of the wing tip surface may be greater than the surface area of the second portion of the wing tip surface.

The whole of the wing tip surface of the wing may be made up of both the first portion of the wing tip surface and the second portion of the wing tip surface. Substantially every position on the surface of the second portion of the wing tip surface may be substantially the same radial distance from the rotor axis.

The width of the second portion of the wing tip surface may vary between a first width W5 and a second width W3, and a width of the first portion of the wing tip surface may vary between the second width W3 and a third width W1, where W1 is greater than W3 and W3 is greater than W5.

The third helix angle (α1) may be different from the fourth helix angle (β1).

The fourth helix angle (β1) may be greater than the third helix angle (α1), the third helix angle (α1) may be greater than the second helix angle (β), and the second helix angle (β) may be greater than the first helix angle (α).

The value of the second helix angle (β) minus the value of the first helix angle (α) may be greater than the value of the fourth helix angle (β1) minus the value of the third helix angle (α1).

The wing may be a long wing.

As will be readily understood by the skilled person, the long wing may extend over a significant portion of an axial and circumferential length of the rotor. For example, the long wing may extend circumferentially about 130 degrees of the rotor, and may extend axially about 50% of the length of the rotor. Other dimensions are possible. For example, the long wing may extend circumferentially between 90 degrees and 180 degrees of the rotor, and may extend axially between 30% and 80% of the length of the rotor.

The rotor may further comprise a second wing extending from the main body, and arrange helically about a portion of the main body, wherein the second wing is a short wing.

The short wing may be said to extend radially from the main body. The short wing may extend (axially and circumferentially) from a first end of the rotor. The short wing may extend circumferentially about 80 degrees of the rotor, and may extend axially about 25% of the length of the rotor. Other dimensions are possible. For example, the short wing may extend circumferentially between 40 degrees and 120 degrees of the rotor, and may extend axially between 10% and 40% of the length of the rotor. The short wing may have shorter axial and circumferential dimensions than the long wing.

The second wing may comprise a fifth edge and a sixth edge, a wing tip surface extending between the fifth edge and sixth edge; wherein the fifth edge may comprise a fifth helix angle (α2) and the sixth edge may comprise a sixth helix angle (β2), the fifth helix angle being different to the sixth helix angle.

Advantageously, having a short wing with said arrangement can help divert material away from dust seals within a mixer and back to a centre of the mixing chamber. This arrangement has been found to work particularly well when used with a long wing having multiple helix angles as described herein.

Substantially every position on the surface of the wing tip surface of the second wing may be substantially the same radial distance from the rotor axis. Said radial distance may be the same as both the first portion and second portion of said first mentioned wing.

The fifth helix angle (α2) may be greater than the sixth helix angle (β2).

The rotor may comprise a second short wing.

The second short wing may extend from a second end of the rotor. The second short wing may be circumferentially separated from the first short wing by an angle of about 180°. The shape of the second short wing may be a reflection of the first short wing through an axis perpendicular to the axial rotor axis.

That is, each short wing may be located generally on opposite axial and circumferential sides of the main body, and wherein each wing originates generally from a different end of the main body.

The rotor may comprise a second long wing.

The second long wing may be circumferentially separated from the first long wing by an angle of about 180°. The shape of the second long wing may be a reflection of the first long wing through an axis perpendicular to the axial rotor axis. That is, each long wing may be located generally on opposite circumferential sides of the main body, and wherein each long wing extends generally from a different axial point of the main body. Note that the long wings may not extend from the immediate axial end of the main body, but may extend from a point inboard of the main body, the point being closer to one end of the main body than the other end.

The rotor may further comprise one or more coolant channels for passing coolant through.

By increasing the area of the wing tip, a greater contact surface area is provided which can improve cooling and temperature control. Additionally, a wider wing tip further allows cooling channels to be provided closer to the surface of the wing helping heat transfer. That is, the coolant channels may be provided in any of the wings herein described. The coolant channels may extend along a portion of the wing tip surface of any of the wings described herein.

In a second aspect of the invention, there is provided a tangential internal batch mixer according to claim 14 for mixing materials, the mixer comprising: a mixing chamber for mixing the material the mixing chamber comprising two rotors as previously described with respect to the first aspect, the two rotors configured to rotate in opposite directions.

In a third aspect of the invention, there is provided a computer program according to claim 15 comprising computer executable instructions that, when executed by a processor, cause the processor to control an additive manufacturing apparatus to manufacture the rotor of the first aspect.

### Brief description of drawings

Specific embodiments of the present invention will now be described, by way of example only, with reference to the accompanying drawings, in which:
Figure 1 is a cross section view of a prior art mixer;
Figure 2 is a plan cross sectional view of the mixer of Figure 1;
Figure 3 is a cross section through a prior art rotor;
Figure 4 is a plan view showing the fluid movement when using two rotors of the prior art;
Figure 5 shows a plan view of a rotor of the present invention;
Figure 6 shows the surface of the rotor of Figure 5 in an "unwrapped" configuration;
Figure 7 shows a land area of a tip surface of the rotor of Figure 5 with relative varying helix angles of the present invention;
Figure 8 shows a cross section through the rotor of Figure 5, and a position through a long wing;
Figure 9 shows a cross section through the rotor of Figure 5, and a position through the long wing of Figure 5;
Figure 10 shows a cross section through the rotor of Figure 5, and a position through the long wing of Figure 5;
Figure 11 shows a cross section through the rotor of Figure 5, and a position through the long wing of Figure 5;
Figure 12 shows a cross section through the rotor of Figure 5, and a position through the long wing of Figure 5;
Figure 13 shows a cross section through the rotor of Figure 5, and a position through a short wing of Figure 5;
Figure 14 shows a cross section through the rotor of Figure 5, and a position through the short wing of Figure 5;
Figure 15 shows a cross section through the rotor of Figure 5, and a position through the short wing of Figure 5;
Figure 16 shows a land area of a tip surface of a prior art rotor with a non-varying wing tip width;
Figure 17 shows a land area of a tip surface with a varying wing tip width according to an embodiment of the present invention;
Figure 18 shows a plan view of two rotors in a 0:0 configuration according to an embodiment of the present invention;
Figure 19 shows fluid movement of the two rotors of Figure 18;
Figure 20 shows the interaction of the two rotors in an "unwrapped" configuration, in a 0:0 orientation according to an embodiment of the present invention;
Figure 21 shows a plan view of two rotors in a 0:180 configuration according to an embodiment of the present invention;
Figure 22 shows fluid movement of the two rotors of Figure 21;
Figure 23 shows the interaction of the two rotors in an "unwrapped" configuration, in a 0:180 orientation according to an embodiment of the present invention; and
Figure 24 shows a plot of average shear rate against land width for a rotor.

### Detailed description

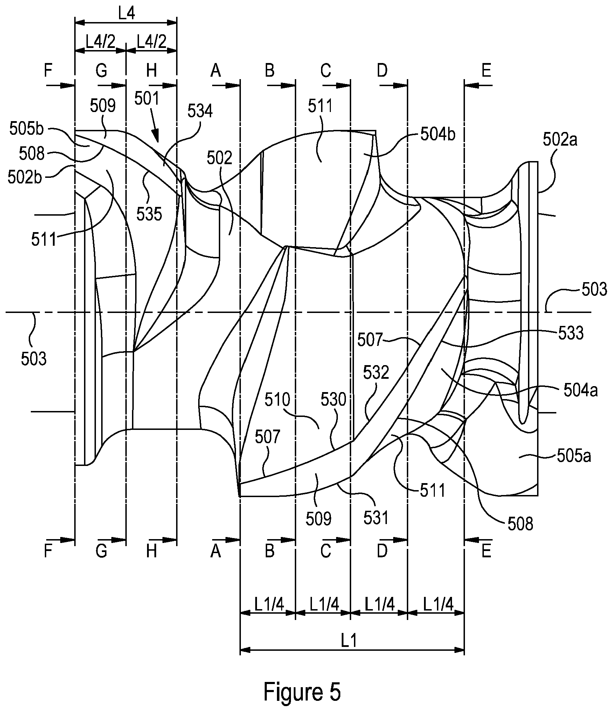

Figure 5 shows a rotor 501 according to an embodiment of the invention. The rotor 501 is suitable for use in a tangential internal batch mixer such as the mixer 20 described above. However, it will be understood that the rotor 501 may be used in any suitable mixer. The rotor 501 comprises a main body 502, which is generally cylindrical in shape, and having a first end 502a and a second end 502b. The rotor 501 is configured to rotate about a rotor axis 503. The rotor 501 further comprises a first long wing 504a, second long wing 504b, first short wing 505a and second short wing 505b. The wings 504, 505 extend radially from the main body 502, and are of helical configuration. That is, being of helical configuration means that the wings extend both axially and circumferentially along portions of the main body 502. While the rotor 501 is shown as comprising two long wings and two short wings, it will be appreciated that any suitable number of long and short wings, including one, may be used. Additionally, in some embodiments, there may be no short wings.

Referring to Figure 5, the long and short wings 504, 505 comprise a first side 510, a wing tip surface 509 and a second side 511. The first side 510 extends radially from the main body 502 and terminates at a leading edge 507. The second side extends radially from the main body 502 and terminates at a trailing edge 508. The leading edge 507 is defined between the first side 510 and the wing tip surface 509, and the trailing edge 508 is defined between the second side 511 and the wing tip surface 509. That is, the wing tip surface 509 is located between the leading edge 507 and the trailing edge 508. The wing tip surface 509 is sometimes known as the land area of the wing. As will be described in more detail below, the wing tip surface 509 varies in width along its axial length. Reference to a leading edge and a trailing edge will be well understood by the skilled person in the field of rotor design. For example, the leading edge 507 is an edge located towards the front of the wings 504, 505 during rotation and the trailing edge 508 is an edge located towards the rear of the wings during rotation. That is, the leading edge 507 is ahead of the trailing edge 508 in the direction of rotation 506.

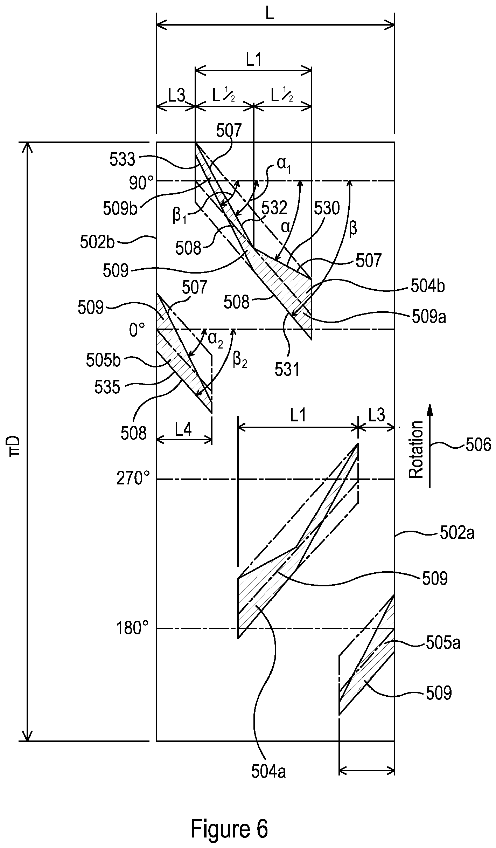

Figure 6 shows a plan view of rotor 501 when unrolled. The rotor 501 has an axial length L, where typically L may be 150mm < L < 1200mm. The circumference of the rotor when unrolled is πD, where D is a diameter of the rotor 501, where typically D may be 96mm < D < 805mm. Arrow 506 shows the direction of rotation of the rotor 501, which defines the leading edge 507 and trailing edge 508 of the wings. For clarity, the outline of the long wings 504 and short wings 505 shown in Figure 6 only depict the shape of the wing tip surfaces 509 (the hatched regions) of the wings 504, 505, and not the full outline of the wings. That is, the full extent on the wings 504, 505 are not shown in Figure 6.

The first and second long wings 504a, 504b have the same axial length L1, where L1 is less than L. Axial length L1 may be, for example, approximately 50% of the axial length L of the rotor 501. The first long wing 504a originates at a point a first axial distance from the first end 502a of the rotor 501, and the second long wing 504b originates at a point a second axial distance from the second end 502b of the rotor 501. In the embodiment shown, the first and second axial distances are the same, L3. L3 may be, for example, approximately 15% of L. However, it will be appreciated that these distances may differ in other embodiments. The first and second long wings 504a, 504b may each extend approximately 130 degrees. For example, the first long wing 504a may originate at an angular position of approximately 155-165 degrees and may terminate at approximately 285-295 degrees. The second long wing 504b is a reflection of the first long wing 504a through an axis perpendicular to the axial rotor axis and is separated by 180 degrees.

The first and second short wings 505a, 505b may each extend approximately 80 degrees. For example, the first short wing 505a may extend from the first end 502a of the rotor 501, at, for example, an angular position of approximately 200-210 degrees, and may terminate at approximately 120-130 degrees (e.g. extends approximately 80 degrees). The second short wing 505b may extend from the second end 502b of the rotor 501, and is a reflection of the first short wing 505a through an axis perpendicular to the axial rotor axis and is separated by 180 degrees. The first and second short wings 505 have the same axial length L4, where L4 is less than L1 and L. L4 may be approximately 25% of the axial length L of the rotor 501. The wing length L4 of the short wings 505 is larger than the first and second distances L3. This can help prevent a ring of material from forming at either end of the rotor 501 during mixing. Again, such an arrangement in length of L4 relative to L3 is optional.

As can be seen in Figure 6, the circumferential length of the long wings 504a, 504b are the same as each other, and the circumferential length of the short wings 505a, 505b are the same as each other. It will of course be appreciated that the axial lengths as well as the circumferential length of the wings may vary relative to one another in certain embodiments. For example, the first long wing may have a greater axial length than the second long wing. Additionally, the specific angles at which the wings originate or terminate may differ than that shown.

As can be seen in Figure 6, and mentioned above, the first and second long wings 504a, 504b are separated by 180°. Additionally, the shape of the first long wing 504a is a reflection of the second long wing 504b through an axis perpendicular to the axial rotor axis. Similarly, the first and second short wings 505a, 505b are separated by 180°, and the shape of the first short wing 505a is a reflection of the second short wing 505b through the axis perpendicular to the axial rotor axis.

As described above, the wings 504, 505 are of helical configuration. The leading edge 507 of the long wings 504 comprise two helix angles α, α1. The trailing edge 508 of the long wings 504 also comprise two helix angles β, β1. A first edge 530 has first helix angle α, the first edge 530 aligned with a first portion of the leading edge 507. A second edge 531 has second helix angle β, the second edge 531 aligned with a first portion of the trailing edge 508. A third edge 532 has third helix angle α1, the third edge 532 aligned with a second portion of the leading edge 507. A fourth edge 533 has fourth helix angle β1, the fourth edge 533 aligned with a second portion of the trailing edge 508.

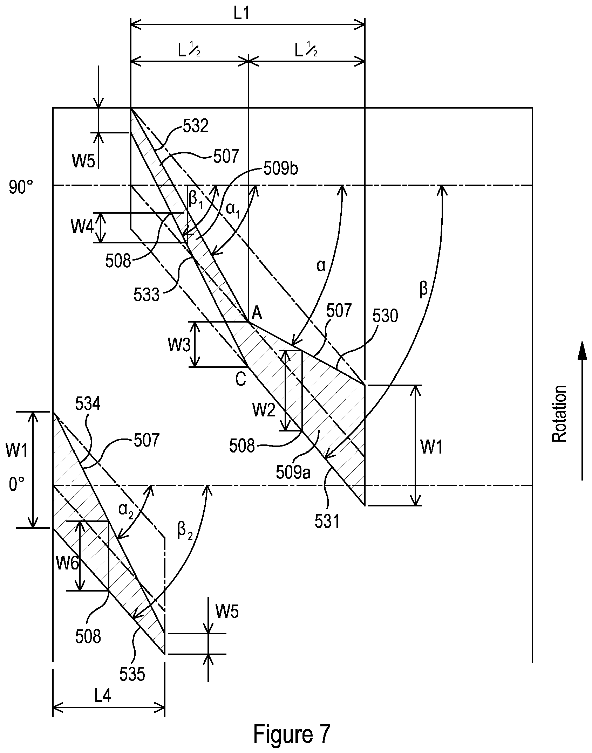

The first, second, third and fourth edges 530, 531, 532, 533 have axial length L1/2 (e.g. half the axial length L of the wing). That is, with reference to Figure 7, the helix angle of the leading edge 507 changes at position A, where position A is located at the axial midpoint of the long wing 504, and the helix angle of the trailing edge 508 changes at position C, where position C, like position A, is located at the axial midpoint of the long wing 504. It will of course be appreciated that there may be variation in the relative positions of A and C in other embodiments.

The first edge 530 and the second edge 531 are opposite one another, defining a first portion 509a of the wing tip surface therebetween. That is, the first portion 509a of the wing tip surface 509 extends between the first edge 530 and the second edge 531. Similarly, the third edge 532 and fourth edge 533 are opposite each other, defining a second portion 509b of the wing tip surface therebetween. That is, the second portion 509b of the wing tip surface 509 extends between the third edge 532 and the fourth edge 533. The first portion 509a has a greater area than the second portion 509b. Each of the different shapes of the two portions 509a, 509b of the wing tip surface 509 provide different mixing properties for the rotor 501.

In the embodiment shown, each of the first α, second β, third α1 and fourth β1 helix angles are different to each other. In an embodiment, β1> α1> β >α. Additionally, in an embodiment, (β - α) > (β1 - α1). The difference in the helix angles leads to differing wing tip surface 509 widths (where wing tip surface widths are sometimes referred to as land widths). For example, as can be seen in Figure 7, the difference in the helix angle of the leading edge 507 to the trailing edge 508 leads to a variation in the tip width w1 to w5 along the length of the wing 504. That is, the variation in the wing tip surface 509 is shown as a tapering in the width W of the wing tip surface 509. The wing 504 is at its most narrow point, W5, at the position where the long wing originates, e.g. L3 from the end of the rotor main body 502. In an example embodiment, W5 may be about 17% of W1. In other embodiments, W5 may be between approximately 10% - 20% of W1. At the axial mid point, e.g. at positions A and C where the helix angles change, the width of the wing tip surface is W3 (between points A and C). W3 may be approximately 45% of W1. In other embodiments, W3 may be between approximately 40%-50% of W1. Advantageously, this tapering in width provides a wing which has both the benefits of a narrow wing tip and a wide wing tip on the same wing.

It will be appreciated that any value of angle may be used such that a difference in tip width is achieved at different parts of the wing 504. In a specific embodiment, α = 28 degrees, β = 49 degrees, α1 = 60 degrees, and β1 = 63 degrees. Other values are possible. Additionally, while the long wings 504 of the rotor 501 have been described as having two different helix angles in both the leading and trailing edges, it will be appreciated that the long wing may have additional helix angles along each of the leading or trailing edges.

Referring now to the short wings 505, in the embodiment shown, the leading edge 507 of the short wings 505 comprise a fifth edge 534 that has a fifth helix angle α2 along substantially the entire wing length L4 of the short wing 505. The trailing edge 508 of the short wings 505 comprise a sixth edge 535 that has a sixth helix angle β2 along substantially the entire wing length L4. Unlike the long wings 504, the leading and trailing edges 507, 508 of the short wings 505 each have a constant helix angle. In the embodiment shown, the fifth angle α2 is greater than the sixth helix angle β2, which helps divert material away from the dust seals and back to the centre of the mixing chamber. Additionally, the difference in the helix angle leads to a variation in the tip width (W1, W6, W5) along the length of the short wing 505. As can be seen in Figure 7, the maximum tip width of the short wings 505 is W1, which is equal to the maximum tip width of the long wings 504. The minimum tip width of the short wing 505 is W5, which is equal to the minimum tip width of the long wings 504. However, this need not be the case in every embodiment. It will be appreciated that any value of angle may be used such that a difference in tip width is achieved at different parts of the wing 505. In an embodiment, α2 = 64 degrees and β2 = 49 degrees. Other values are possible.

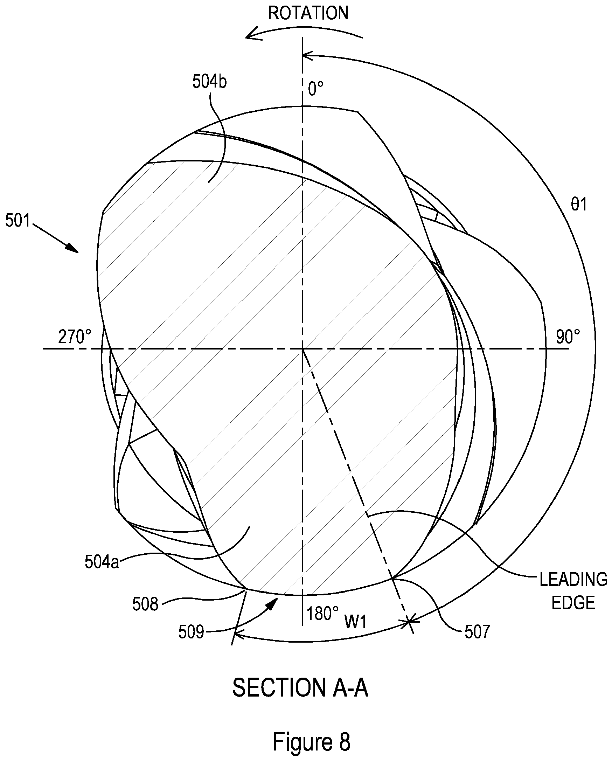

The change in width of the wing tip surface 509 along the long wings 504 is more clearly shown in Figures 8 to 12, which show a cross sectional views of the rotor 501 along lines A, B, C, D and E, shown in Figure 5. Lines A, B, C, D and E are each separated by a distance of a quarter of L along the axial length of the rotor.

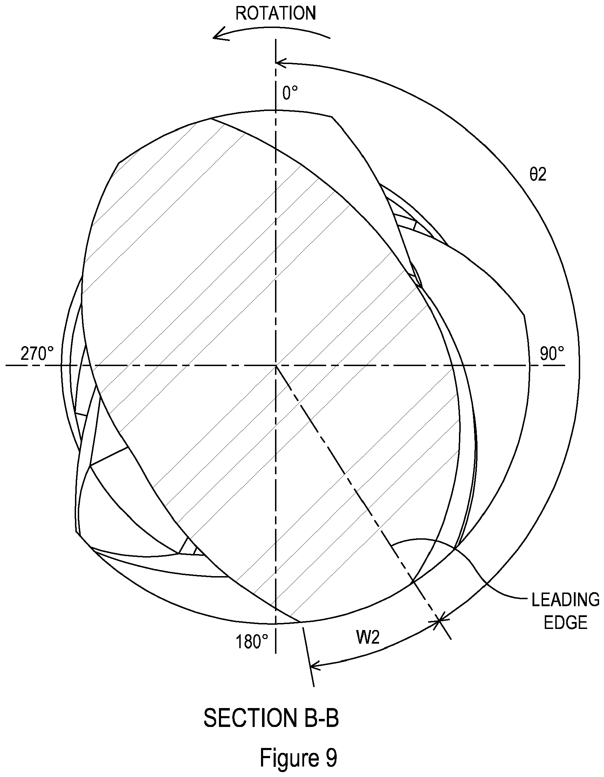

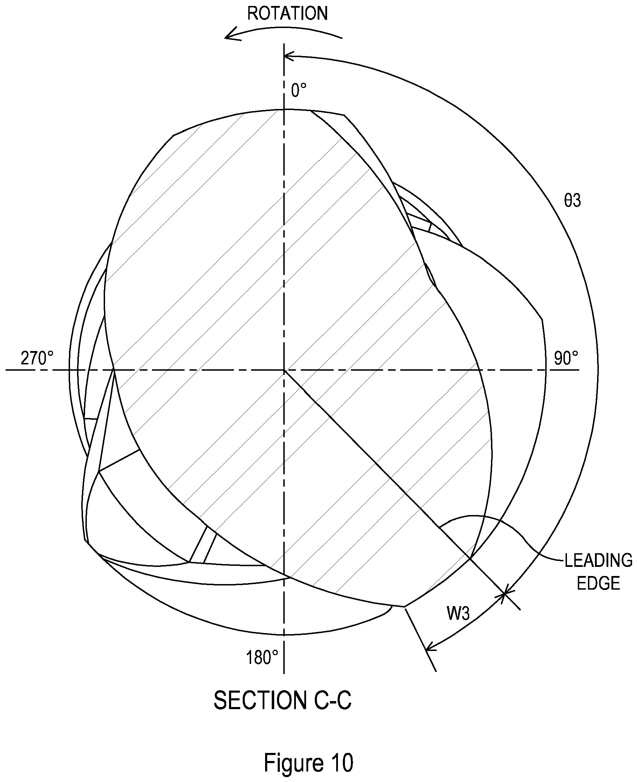

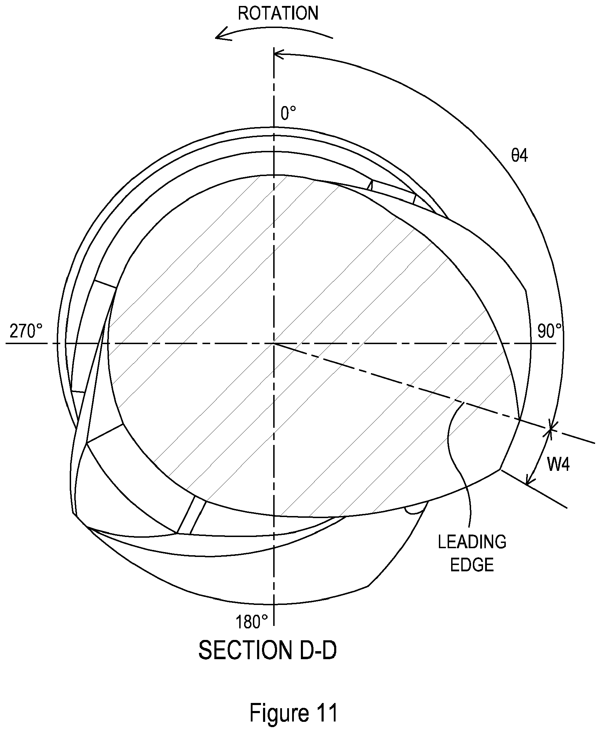

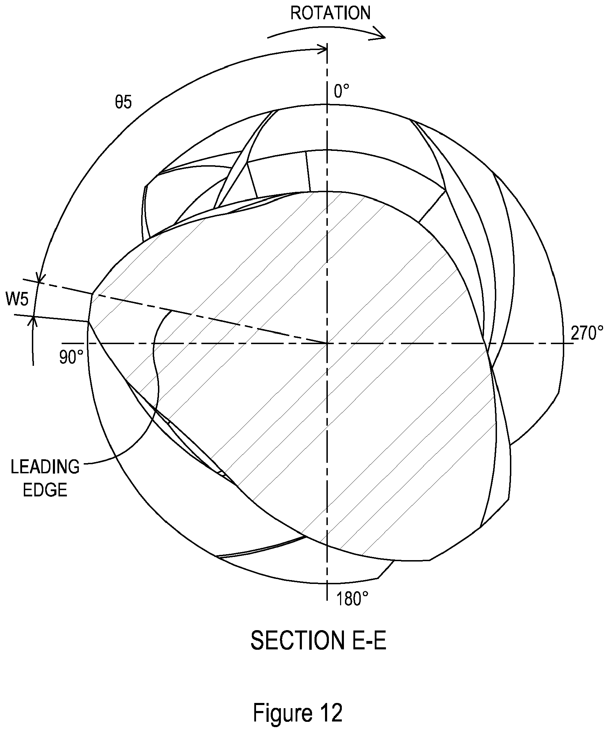

Figure 8, corresponding to the cross section through line A, shows the tip width of the long wing 504 being equal to W1. Angle θ1 is the angle between the leading edge 507 of the wing through line A and a reference point, which in Figure 8 is a vertical line. Figure 9, corresponding to the cross section through line B, shows the tip width of the long wing 504 being equal to W2, where W2 is less than W1. Angle θ2 is the angle between the leading edge 507 of the wing through line B and the reference point, and is less than θ1 due to the helical configuration of the wing. Figure 10, corresponding to the cross section through line C, shows the tip width of the long wing being equal to W3, where W3 is less than W2. Angle θ3 is the angle between the leading edge 507 of the wing through line C and the reference point, and is less than θ2. Figure 11, corresponding to the cross section through line D, shows the tip width of the long wing being equal to W4, which is less than W3. Angle θ4 is the angle between the leading edge 507 of the wing through line D and the reference point, and is less than θ3. Figure 12, corresponding to the cross section through line E, shows the tip width of the long wing being equal to W5, which is less than W4. Angle θ5 is the angle between the leading edge 507 of the wing through line E and the reference point, and is less than θ4.

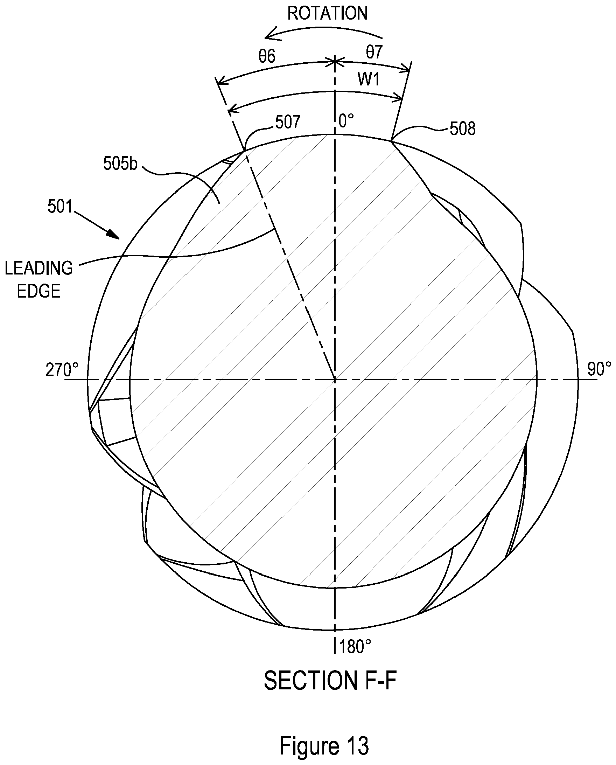

The change in width of the wing tip surface 509 along the short wings 505 is more clearly shown in Figures 13 to 15, which show cross sectional views of the rotor 501 along lines F, G and H, shown in Figure 5. Lines F, G and H are each separated by a distance of half of L4 along the axial length of the rotor.

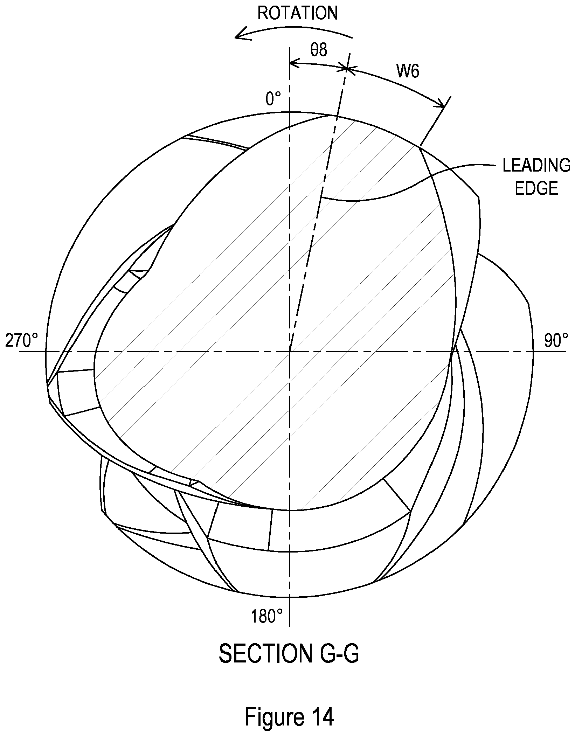

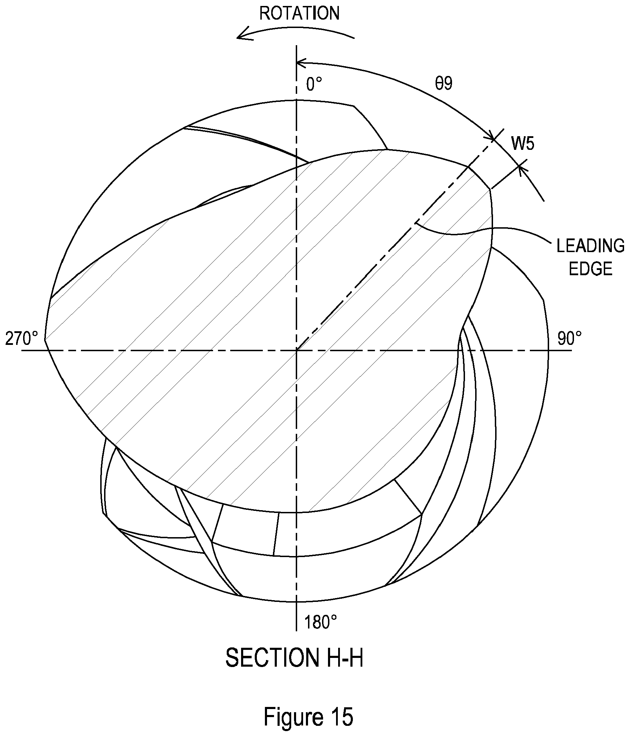

Figure 13, corresponding to the cross section through line F, shows the tip width of the short wing 505 being equal to W1 (the same as maximum wing tip width of long wing shown in Figure 8). Angle θ6 is the angle between the leading edge 507 of the short wing 505 through line F and a reference point, which in Figure 13 is a vertical line. Angle θ7 is the angle between the trailing edge 508 of the wing through line F and the reference point. Figure 14, corresponding to the cross section through line G, shows the tip width of the short wing 505 being equal to W6, where W6 is less than W1. Angle θ8 is the angle between the leading edge 507 of the wing through line G and the reference point, and is less than θ6 + θ7 due to the helical configuration of the wing. Figure 15, corresponding to the cross section through line H, shows the tip width of the short wing being equal to W5 (the same as minimum wing tip width of long wing), where W5 is less than W6. Angle θ9 is the angle between the leading edge 507 of the wing through line H and the reference point, and is greater than θ8.

As can be seen in Figures 8 to 15, the wing tip surface 509 is not flat (i.e. a straight line) in cross section of the plane perpendicular to the rotor axis, but is curved so as to align with the circumference of the envelope outlined by the rotor. Additionally, the wing tip surface 509 is substantially the same radial distance from the rotor axis along the length of the wings. As such the tip clearance 309 (shown in Figure 3) remains generally constant along the length of the wing. Of course, in alternative embodiments, the tip surface may have a curvature that differs from the circumference of the envelope of the rotor.

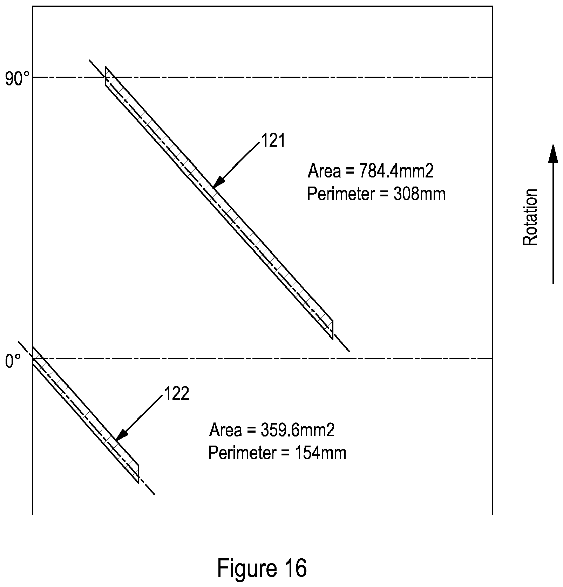

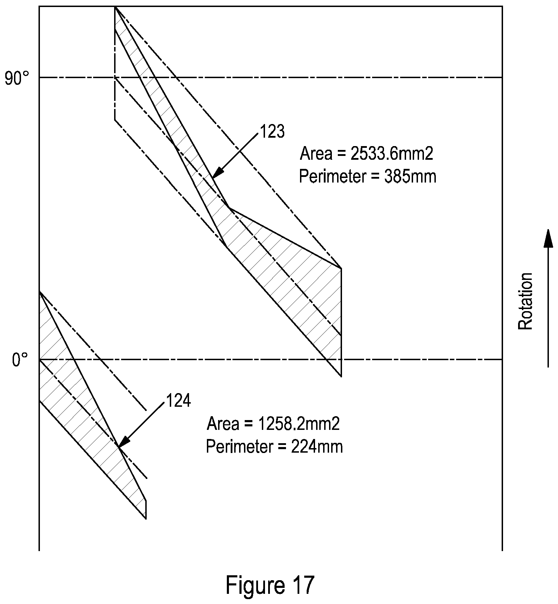

Figures 16 and 17 highlight the difference in area of the wing tip surface 509 when the tip width is constant along the width compared to when the tip width varies. Referring to Figure 16, a rotor is shown having non tapered wings. Hatched section 121 shows the area of a long wing tip surface when there is no variation in the helix angle of the trailing edge relative to the leading edge. The hatched area 121 is 784.4 mm² and the perimeter is 308 mm. Hatched section 122 shows the area of a short wing tip surface when there is no variation in the helix angle of the trailing edge relative to the leading edge. The area of the section 122 is 359.6 mm² and the perimeter is 154mm. Referring to Figure 17, a rotor is shown having tapered wing tips as shown in Figure 7. The wings have the same axial length as those of Figure 16. Hatched section 123 shows the area of the long wing tip, and hatched section 124 shows the area of a short wing tip surface, where the helix angle of the trailing edge varies relative to the leading edge. The wing tip surface of the long wing (highlighted by 123) has an area of 2533.6 mm² and a perimeter of 385 mm. The wing tip surface of the short wing, highlighted by 124, has an area 1258.2 mm² and a perimeter 224 mm. As can be seen, the wing tip surface 509 of the wings of the present invention provide a significantly greater surface area over prior art designs. Of course, it will be appreciated that the specific values given for the area and perimeter of the long and short wings 504, 505 may vary, depending on the size of the wings and the values of the helix angles that are used.

As described above, a tangential mixer such as that shown in Figure 1 comprises two, usually identical, rotors for mixing material. The two rotors are counter-rotated about spaced apart parallel horizontal axes. One rotor may be rotated at a different rotational speed than the other rotor, or both rotors may rotate at the same rotational speed. In cases where the two rotors rotate at the same rotational speed, the orientation of one rotor to the other rotor is predetermined, usually prior to mixing, but can in some cases be changed during mixing, or between mixing phases. Mixing phases can include (but are not limited to) mastication, incorporation and dispersion and distribution.

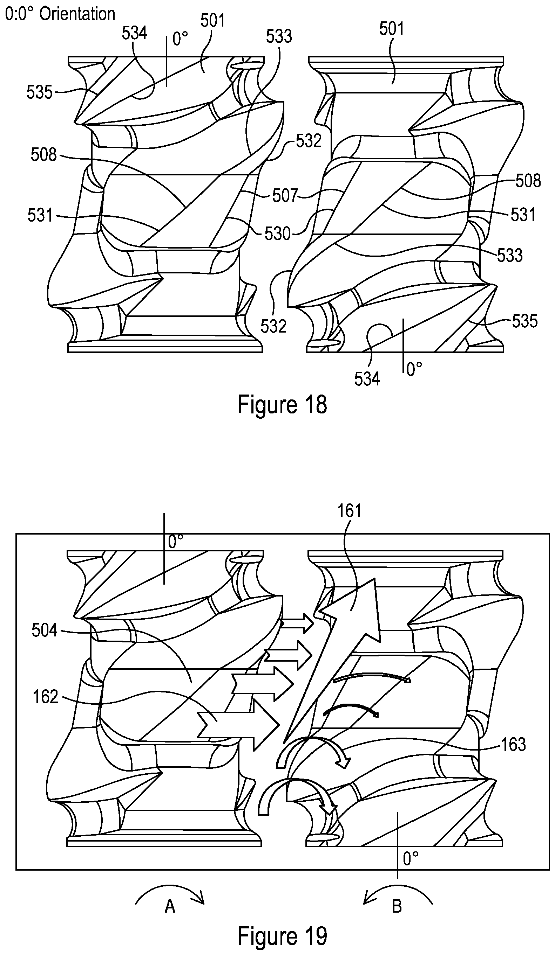

Figure 18 shows an embodiment where two rotors 501 of the present invention are in a 0:0 orientation, where one rotor is flipped relative to the other rotor in the plane perpendicular to the rotor axis. Figure 19 shows three components of the flow of material during rotation of the rotors shown in Figure 18, where the leftmost rotor rotates in the direction indicated by arrow A and the rightmost rotor rotates in the direction indicated by arrow B, both rotors having the same rotational speed. As can be seen in Figure 19, the main components of flow are flow along the length of long wings 504 (indicated by arrow 161), which displaces the material along the axial length of the rotor 501, flow in front of the long wings 504 (indicated by arrow 162), which displaces the material radially from one rotor to the other, and flow over the wing tip surface 509 (indicated by arrow 163). For clarity, not all components of flow are shown.

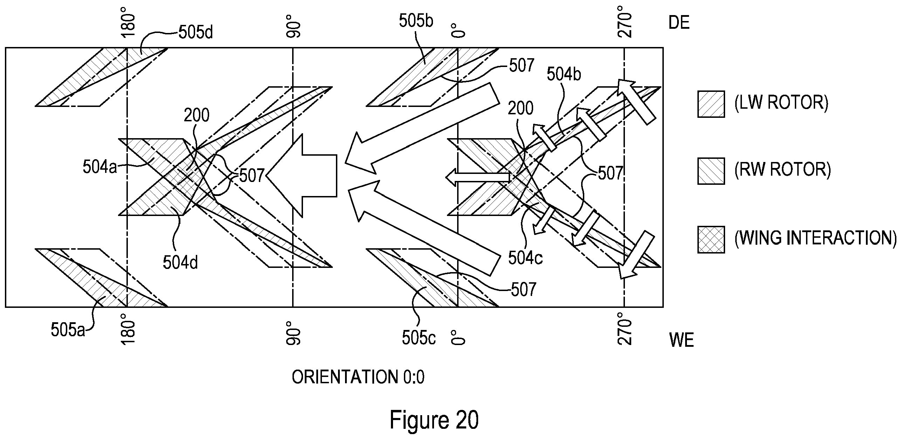

Figure 20 shows the interaction of the two rotors of Figure 19 in an "unwrapped" configuration, in a 0:0 orientation. The left rotor of Figure 19 is shown in Figure 20 as having two long wings 504a, 504b and two short wings 505a, 505b. The right rotor of Figure 19 is shown as having two long wings 504c, 504d and two short wings 505c, 505d. As can be seen, this arrangement provides a relatively minimal wing interaction (highlighted by portions 200 in Figure 20). This arrangement allows pressure build up in front of the long wings 504, and also allows exchange of material from rotor to rotor and a high shear plane, which increases dispersive mixing. Additionally, the wing tip surface 509 of the wings of the present disclosure drive material onto the opposite rotor's wing tip surface 509 (e.g. in the portion highlighted 200). Given that the wing tip surfaces 509 have a larger surface area due to the differing helix angles described above, a larger region of high "squeeze" between the wing tip surfaces 509 of the two rotors is achieved, which facilitates dispersive mixing. There is also splitting of material into parallel flow paths which are guided back towards the centre of the rotor by the short wings 504. That is, the leading edge 507 of the short wings 505 promotes the axial flow of material back into the leading edges 507 of the long wings 504.

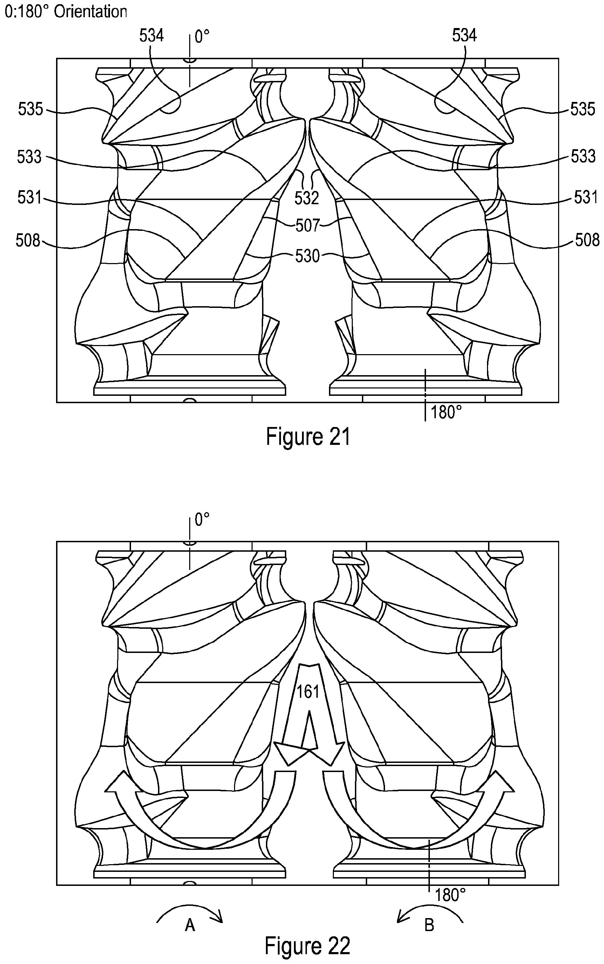

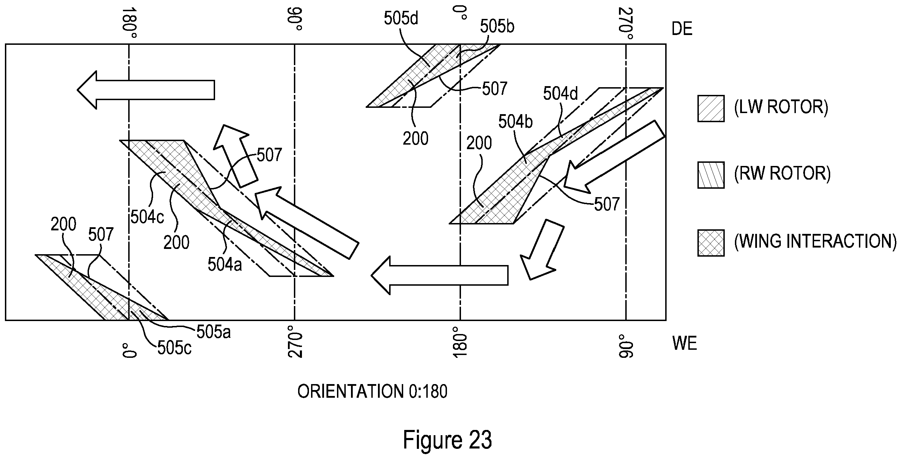

Figure 21 shows an embodiment where two rotors 501 are in a 0:180 orientation, where one rotor is rotated 180° with respect to the other rotor. In the 0:180 orientation, wing tip interaction is at its maximum as shown in Figure 23, providing the highest "squeeze" on both long and short wings 504, 505. The wings 504, 505 are directly 1:1 to each other and "roll" off over each other. That is, the rotors mirror one another so that each rotor wing tip surface 509 meets the corresponding rotor's wing tip surface as the rotors rotate. In this configuration, the exchange of material from rotor to rotor via the long and short wings is minimal, as the material flows (in terms of pressure in front of the wings) cancel each other out. Instead, this configuration causes the majority of material to flow along the length of the rotors (path 161).

Figure 23 shows the interaction of the two rotors of Figure 22 in an "unwrapped" configuration, in a 0:180 orientation. Long wings 504a, 504b of the left rotor of Figure 22 overlap 200 with the corresponding long wings 504c, 504d of the right rotor of Figure 22. Similarly, Short wings 505a, 505b of the left rotor of Figure 22 overlap with the corresponding short wings 505c, 505d of the right rotor of Figure 22. This arrangement provides maximum wing interaction, and where pressure build up in front of the long wings 504 is equal (cancel each other out) as they roll over each other which leads to minimal material being exchanged from rotor to rotor 162. Additionally, minimal gap flow 163 is provided, reducing dispersive mixing. There is also minimal splitting of material into parallel flow paths. As can be seen in Figure 23, the majority of material flow is along the length of the long wings 504 leading edges 507, shown as path 161 in Figure 22, which displaces the material along the axial length of the rotor 401. This arrangement can improve distribution. As is also shown, the short wings in this arrangement do not provide a significant contribution to the mixing. As such, in some configurations, the short wings may not be required.

The orientations between the rotors may be chosen so as to increase or decrease wing tip to wing tip interaction. The orientation may be chosen depending on the particular material being mixed or phase of the mixing cycle. For example, some materials may benefit from a maximum wing tip to wing tip interaction, and so a 0:180 orientation may be used. Other materials may require less wing tip to wing tip interaction, and so an orientation between 0:90 and 0:180, or between 0:0 and 0:90 may be chosen.

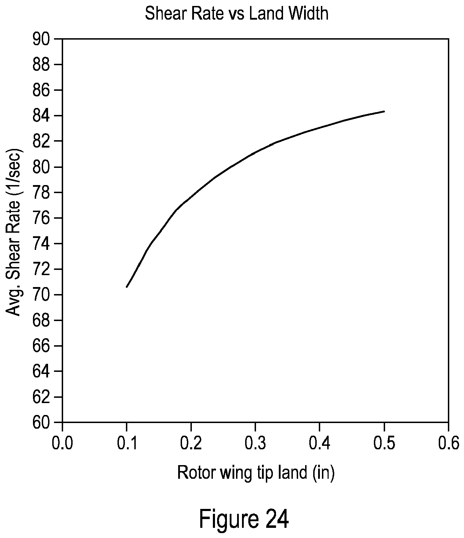

Figure 24 shows a plot of average shear rate against tip width of a prior art wing tip having a non-tapered wing. As can be seen, as the tip width increases, so does the average shear rate. Traditional rotor design would select a particular rotor having wings with a particular tip width for use with a particular material to be mixed. As the long wings of the rotor of the present invention have a varying tip width along the length of the wing, different parts of wing will impart a different shear on the material being mixed. This can further be combined with a specific orientation of the rotors such that an end user has a greater range of average shear rates that are possible than using traditional rotors. Therefore, a rotor according to the present invention can provide a range of shear rates which can be used with a larger number of compounds to be mixed, rather than traditional rotors which are designed to generate a specific shear rate to be used with a specific compound.

A further advantage of wings having a tapered tip is that they allow variation in the three components of flow (front, side and gap) along the length of the rotor wing. This may be beneficial with materials that mix better with a narrow wing tipped rotor, but also require the advantages provided by a wide tipped rotor, such as increased front and side flow.

As described above, tangential rotors typically generate higher shear (and hence higher temperatures) when compared with inter-meshing rotors. For example, depending on the specific materials being mixed, the temperature may be within a range of about 90 - 200 degrees C. By increasing the area of the wing tip from a normal narrow tip as shown in Figure 16, a greater contact surface area as shown in Figure 17, is provided on the wing which can improve cooling and temperature control. Additionally, a wider wing tip surface further allows cooling channels within the rotor to be closer to the surface of the wing tip surface, reducing the temperature profile that is characteristic on narrow wing rotors where it is difficult to maintain low surface temperatures. This has the effect of achieving a consistent slip-stick characteristic across the surface of the rotor which promotes dispersive mixing. Additionally, the tapered wing tip surface design helps to reduce the chance of hot spot areas developing in the material.

The rotor 501 may be manufactured using any suitable method. For example, the rotors may be formed by casting, machining, or a mixture of both. In some examples, the rotors may be designed on CAD, and a 3D CAD file may be generated and used to create a pattern to enable a steel casting to be poured with an all over machining allowance. A CNC machining program may be used control a machining tool to machine the steel casting to a required finish size.

Alternatively, the rotor 501 may be formed using an additive manufacturing process. A common example of additive manufacturing is 3D printing; however, other methods of additive manufacturing are available.

As used herein, "additive manufacturing" refers generally to manufacturing processes wherein successive layers of material(s) are provided on each other to "build-up" layer-by-layer or "additively fabricate", a three-dimensional component.

Additive manufacturing methods enable manufacture to any suitable size and shape. For example, additive manufacturing can create complex geometries without the use of any sort of tools, molds or fixtures, and with little or no waste material. Any suitable additive manufacturing method may be used. Examples may be Direct Selective Laser Melting (DSLM), Selective Laser Melting (SLM), Direct Metal Laser Melting (DMLM), Direct Metal Laser Sintering (DMLS), or Material Jetting (MJ). Additive manufacturing processes typically fabricate components based on three-dimensional (3D) information, for example a three-dimensional computer model (or design file), of the component. Accordingly, examples described herein not only include products or components as described herein, but also methods of manufacturing such products or components via additive manufacturing and computer software, firmware or hardware for controlling the manufacture of such products via additive manufacturing.

The structure of the rotor 501 may be represented digitally in the form of a design file. A design file, or computer aided design (CAD) file, is a configuration file that encodes one or more of the surface or volumetric configuration of the shape of a product. That is, a design file represents the geometrical arrangement or shape of the product. Design files can take any appropriate file format. For example, design files may be in the Stereolithography or "Standard Tessellation Language" (.stl) format which was created for stereolithography CAD programs of 3D Systems, or the Additive Manufacturing File (.amf) format, which is an American Society of Mechanical Engineers (ASME) standard that is an extensible markup-language (XML) based format designed to allow any CAD software to describe the shape and composition of any three-dimensional object to be fabricated on any additive manufacturing printer. Further examples of design file formats include AutoCAD (.dwg) files, Blender (.blend) files, Parasolid (.x_t) files, 3D Manufacturing Format (.3mf) files, Autodesk (3ds) files, Collada (.dae) files and Wavefront (.obj) files, although many other file formats exist.

Design files can be produced using modelling (e.g. CAD modelling) software and/or through scanning the surface of the rotor 501 to measure the surface configuration of the rotor 501. Once obtained, a design file may be converted into a set of computer executable instructions that, once executed by a processor, cause the processor to control an additive manufacturing apparatus to produce a rotor 501 according to the geometrical arrangement specified in the design file. The conversion may convert the design file into slices or layers that are to be formed sequentially by the additive manufacturing apparatus. The instructions (otherwise known as geometric code or "G-code") may be calibrated to the specific additive manufacturing apparatus and may specify the precise location and amount of material that is to be formed at each stage in the manufacturing process.

The code or instructions may be translated between different formats, converted into a set of data signals and transmitted, received as a set of data signals and converted to code, stored, etc., as necessary. The instructions may be an input to the additive manufacturing system and may come from a part designer, an intellectual property (IP) provider, a design company, the operator or owner of the additive manufacturing system, or from other sources. An additive manufacturing system may execute the instructions to fabricate the rotor using any of the technologies or methods disclosed herein.

Design files or computer executable instructions may be stored in a (transitory or non-transitory) computer readable storage medium (e.g., memory, storage system, etc.) storing code, or computer readable instructions, representative of the product to be produced. As noted, the code or computer readable instructions defining the rotor that can be used to physically generate the rotor, upon execution of the code or instructions by an additive manufacturing system. For example, the instructions may include a precisely defined 3D model of the rotor and can be generated from any of a large variety of well-known computer aided design (CAD) software systems such as AutoCAD^{®}, TurboCAD^{®}, DesignCAD 3D Max, etc. Alternatively, a model or prototype of the rotor may be scanned to determine the three-dimensional information of the rotor.

Accordingly, by controlling an additive manufacturing apparatus according to the computer executable instructions, the additive manufacturing apparatus can be instructed to print out the rotor.

In light of the above, embodiments include methods of manufacture via additive manufacturing. This includes the steps of obtaining a design file representing the rotor and instructing an additive manufacturing apparatus to manufacture the rotor in assembled or unassembled form according to the design file. The additive manufacturing apparatus may include a processor that is configured to automatically convert the design file into computer executable instructions for controlling the manufacture of the rotor. In these embodiments, the design file itself can automatically cause the production of the rotor once input into the additive manufacturing device. Accordingly, in this embodiment, the design file itself may be considered computer executable instructions that cause the additive manufacturing apparatus to manufacture the rotor. Alternatively, the design file may be converted into instructions by an external computing system, with the resulting computer executable instructions being provided to the additive manufacturing device.

Given the above, the design and manufacture of implementations of the subject matter and the operations described in this specification can be realized using digital electronic circuitry, or in computer software, firmware, or hardware, including the structures disclosed in this specification and their structural equivalents, or in combinations of one or more of them. For instance, hardware may include processors, microprocessors, electronic circuitry, electronic components, integrated circuits, etc. Implementations of the subject matter described in this specification can be realized using one or more computer programs, i.e., one or more modules of computer program instructions, encoded on computer storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

## Claims

1. A rotor (501) for use in a tangential internal batch mixer, the rotor comprising:
a main body (502) configured to rotate about a rotor axis (503),
a wing (504) extending from the main body, and arranged helically about a portion of the main body;
the wing (504) comprising a wing tip surface (509), a first portion (509a) of the wing tip surface extending between a first edge (530) and a second edge (531) of the wing;
**characterised in that** the first edge (530) comprises a first helix angle (α) and the second edge (531) comprises a second helix angle (β), the first helix angle being different to the second helix angle.

2. The rotor of claim 1, the wing (504) comprising a third edge (532) and a fourth edge (533), a second portion (509b) of the wing tip surface extending between the third edge (532) and the fourth edge (533), the third edge comprising a third helix angle α1 and the fourth edge comprising a fourth helix angle β1.

3. The rotor of claims 1 or 2, wherein the width of the second portion (509b) of the wing tip surface (509) varies between a first width W5 and a second width W3, and a width of the first portion (509a) of the wing tip surface (509) varies between the second width W3 and a third width W1, where W1 is greater than W3 and W3 is greater than W5.

4. The rotor of claim 2 or 3, wherein the third helix angle (α1) is different from the fourth helix angle (β1).

5. The rotor of claim 4, wherein the fourth helix angle (β1) is greater than the third helix angle (α1), the third helix angle (α1) is greater than the second helix angle (β), and the second helix angle (β) is greater than the first helix angle (α).

6. The rotor of claim 4 or 5, wherein the value of the second helix angle (β) minus the value of the first helix angle (α) is greater than the value of the fourth helix angle (β1) minus the value of the third helix angle (α1).

7. The rotor of any preceding claim, wherein the wing is a long wing.

8. The rotor of claim 7, further comprising a second wing (505) extending from the main body, and arrange helically about a portion of the main body (502), wherein the second wing is a short wing.

9. The rotor of claim 8, the second wing (505a) comprising a fifth edge (534) and a sixth edge (535), a wing tip surface (509) extending between the fifth edge (534) and sixth edge (535);
wherein the fifth edge (534) comprises a fifth helix angle (α2) and the sixth edge (535) comprises a sixth helix angle (β2), the fifth helix angle being different to the sixth helix angle.

10. The rotor of claim 9, wherein the fifth helix angle (α2) is greater than the sixth helix angle (β2).

11. The rotor of claim 9 or 10, further comprising a second short wing (505b).

12. The rotor of any of claims 7 to 11, further comprising a second long wing (504b).

13. The rotor of any preceding claim, wherein the rotor further comprises one or more coolant channels for passing coolant through.

14. A tangential internal batch mixer for mixing materials, the mixer comprising:
a mixing chamber for mixing the material, the mixing chamber comprising two rotors 501 as in any of claims 1 to 13, the two rotors configured to rotate in opposite directions.

15. A computer program comprising computer executable instructions that, when executed by a processor, cause the processor to control an additive manufacturing apparatus to manufacture the rotor of claim 1 to 13.

## Patentansprüche

1. Rotor (501) zur Verwendung in einem tangentialen internen Chargenmischer, wobei der Rotor Folgendes umfasst:
einen Hauptkörper (502), der konfiguriert ist, um sich um eine Rotorachse (503) zu drehen,
einen Flügel (504), der sich von dem Hauptkörper aus erstreckt und schraubenförmig um einen Abschnitt des Hauptkörpers angeordnet ist;
wobei der Flügel (504) eine Flügelspitzenfläche (509) umfasst, wobei sich ein erster Abschnitt (509a) der Flügelspitzenfläche zwischen einer ersten Kante (530) und einer zweiten Kante (531) des Flügels erstreckt;
**dadurch gekennzeichnet, dass** die erste Kante (530) einen ersten Schrägungswinkel (α) umfasst und die zweite Kante (531) einen zweiten Schrägungswinkel (β) umfasst, wobei der erste Schrägungswinkel von dem zweiten Schrägungswinkel verschieden ist.

2. Rotor nach Anspruch 1, wobei der Flügel (504) eine dritte Kante (532) und eine vierte Kante (533) umfasst, wobei sich ein zweiter Abschnitt (509b) der Flügelspitzenfläche zwischen der dritten Kante (532) und der vierten Kante (533) erstreckt, wobei die dritte Kante einen dritten Schrägungswinkel α1 umfasst und die vierte Kante einen vierten Schrägungswinkel β1 umfasst.

3. Rotor nach Anspruch 1 oder 2, wobei die Breite des zweiten Abschnitts (509b) der Flügelspitzenfläche (509) zwischen einer ersten Breite W5 und einer zweiten Breite W3 variiert, und eine Breite des ersten Abschnitts (509a) der Flügelspitzenfläche (509) zwischen der zweiten Breite W3 und einer dritten Breite W1 variiert, worin W1 größer als W3 ist und W3 größer als W5 ist.

4. Rotor nach Anspruch 2 oder 3, wobei der dritte Schrägungswinkel (α1) vom vierten Schrägungswinkel (β1) verschieden ist.

5. Rotor nach Anspruch 4, wobei der vierte Schrägungswinkel (β1) größer ist als der dritte Schrägungswinkel (α1), der dritte Schrägungswinkel (α1) größer ist als der zweite Schrägungswinkel (β), und der zweite Schrägungswinkel (β) größer ist als der erste Schrägungswinkel (α).

6. Rotor nach Anspruch 4 oder 5, wobei der Wert des zweiten Schrägungswinkels (β) minus dem Wert des ersten Schrägungswinkels (α) größer ist als der Wert des vierten Schrägungswinkels (β1) minus dem Wert des dritten Schrägungswinkels (α1).

7. Rotor nach einem der vorhergehenden Ansprüche, wobei der Flügel ein langer Flügel ist.

8. Rotor nach Anspruch 7, der ferner einen zweiten Flügel (505) umfasst, der sich von dem Hauptkörper aus erstreckt und schraubenförmig um einen Abschnitt des Hauptkörpers (502) anordnen, wobei der zweite Flügel ein kurzer Flügel ist.

9. Rotor nach Anspruch 8, wobei der zweite Flügel (505a) eine fünfte Kante (534) und eine sechste Kante (535) umfasst, wobei sich eine Flügelspitzenfläche (509) zwischen der fünften Kante (534) und der sechsten Kante (535) erstreckt;
wobei die fünfte Kante (534) einen fünften Schrägungswinkel (α2) umfasst und die sechste Kante (535) einen sechsten Schrägungswinkel (β2) umfasst, wobei der fünfte Schrägungswinkel von dem sechsten Schrägungswinkel verschieden ist.

10. Rotor nach Anspruch 9, wobei der fünfte Schrägungswinkel (α2) größer ist als der sechste Schrägungswinkel (β2).

11. Rotor nach Anspruch 9 oder 10, ferner umfassend einen zweiten kurzen Flügel (505b).

12. Rotor nach einem der Ansprüche 7 bis 11, ferner umfassend einen zweiten langen Flügel (504b).

13. Rotor nach einem der vorhergehenden Ansprüche, wobei der Rotor ferner einen oder mehrere Kühlmittelkanäle zum Durchleiten von Kühlmittel umfasst.

14. Tangentialer interner Chargenmischer zum Mischen von Materialien, wobei der Mischer Folgendes umfasst:
eine Mischkammer zum Mischen des Materials, wobei die Mischkammer zwei Rotoren 501 nach einem der Ansprüche 1 bis 13 umfasst, wobei die beiden Rotoren konfiguriert sind, um sich in entgegengesetzte Richtungen zu drehen.

15. Computerprogramm, das computerausführbare Befehle umfasst, die, wenn sie von einem Prozessor ausgeführt werden, den Prozessor veranlassen, eine Vorrichtung zur additiven Fertigung zu steuern, um den Rotor nach Anspruch 1 bis 13 herzustellen.

## Revendications

1. Rotor (501) destiné à être utilisé dans un mélangeur interne tangentiel discontinu, le rotor comprenant :
un corps principal (502) configuré pour tourner autour d'un axe de rotor (503),
une aile (504) s'étendant à partir du corps principal et agencée de manière hélicoïdale autour d'une partie du corps principal ;
l'aile (504) comprenant une surface d'extrémité d'aile (509), une première partie (509a) de la surface d'extrémité d'aile s'étendant entre un premier bord (530) et un second bord (531) de l'aile ;
**caractérisé en ce que** le premier bord (530) comprend un premier angle d'hélice (α) et le second bord (531) comprend un second angle d'hélice (β), le premier angle d'hélice étant différent du second angle d'hélice.

2. Rotor selon la revendication 1, l'aile (504) comprenant un troisième bord (532) et un quatrième bord (533), une deuxième partie (509b) de la surface d'extrémité d'aile s'étendant entre le troisième bord (532) et le quatrième bord (533), le troisième bord comprenant un troisième angle d'hélice α1 et le quatrième bord comprenant un quatrième angle d'hélice β1.

3. Rotor selon la revendication 1 ou 2, dans lequel la largeur de la deuxième partie (509b) de la surface d'extrémité d'aile (509) varie entre une première largeur W5 et une deuxième largeur W3, et une largeur de la première partie (509a) de la surface d'extrémité d'aile (509) varie entre la deuxième largeur W3 et une troisième largeur W1, où W1 est plus grand que W3 et W3 est plus grand que W5.

4. Rotor selon la revendication 2 ou 3, dans lequel le troisième angle d'hélice (α1) est différent du quatrième angle d'hélice (β1).

5. Rotor selon la revendication 4, dans lequel le quatrième angle d'hélice (β1) est supérieur au troisième angle d'hélice (α1), le troisième angle d'hélice (α1) est supérieur au deuxième angle d'hélice (β), et le deuxième angle d'hélice (β) est supérieur au premier angle d'hélice (α).

6. Rotor selon la revendication 4 ou 5, dans lequel la valeur du deuxième angle d'hélice (β) moins la valeur du premier angle d'hélice (α) est supérieure à la valeur du quatrième angle d'hélice (β1) moins la valeur du troisième angle d'hélice (α1).

7. Rotor selon l'une quelconque des revendications précédentes, dans lequel l'aile est une aile longue.

8. Rotor selon la revendication 7, comprenant en outre une deuxième aile (505) s'étendant à partir du corps principal, et agencer de manière hélicoïdale autour d'une partie du corps principal (502), dans lequel la deuxième aile est une aile courte.

9. Rotor selon la revendication 8, la deuxième aile (505a) comprenant un cinquième bord (534) et un sixième bord (535), une surface d'extrémité d'aile (509) s'étendant entre le cinquième bord (534) et le sixième bord (535) ;
dans lequel le cinquième bord (534) comprend un cinquième angle d'hélice (α2) et le sixième bord (535) comprend un sixième angle d'hélice (β2), le cinquième angle d'hélice étant différent du sixième angle d'hélice.

10. Rotor selon la revendication 9, dans lequel le cinquième angle d'hélice (α2) est supérieur au sixième angle d'hélice (β2).

11. Rotor selon la revendication 9 ou 10, comprenant en outre une deuxième aile courte (505b).

12. Rotor selon l'une quelconque des revendications 7 à 11, comprenant en outre une deuxième aile longue (504b).

13. Rotor selon l'une quelconque des revendications précédentes, dans lequel le rotor comprend en outre un ou plusieurs canaux de refroidissement à travers lesquels du liquide de refroidissement peut passer.

14. Mélangeur interne tangentiel discontinu permettant de mélanger des matériaux, le mélangeur comprenant :
une chambre de mélange permettant de mélanger le matériau, la chambre de mélange comprenant deux rotors 501 comme dans l'une quelconque des revendications 1 à 13, les deux rotors étant configurés pour tourner dans des sens opposés.

15. Programme d'ordinateur comprenant des instructions exécutables par ordinateur qui, lorsqu'elles sont exécutées par un processeur, amènent le processeur à commander un appareil de fabrication additive pour qu'il fabrique le rotor selon les revendications 1 à 13.
